# EUROPEAN PATENT APPLICATION

(11) **EP 1 803 347 A1**
(43) Date of publication of application: **04.07.2007**
(21) Application number: 06380324.1
(22) Date of filing: 19.12.2006
(51) Int. Cl.: A01K 1/015, B29C 45/00, F24D 3/16

(54) **A heater plate for pigsty floors and the like, and a process for manufacturing it**

(30) Priority: 28.12.2005 ES 200502825 U; 31.01.2006 ES 200600204 P
(71) Applicant: Tecnica e Innovaciones Ganaderas, S.A., 08720 Vilafranca del Penedes (Barcelona) (ES)
(72) Inventor: Rovira Badia, Antonio c/o TIGSA, 08720 Vilafranca del Penedes (Barcelona) (ES)
(74) Representative: Pastells Teixido, Manuel

(57) **Abstract**

The plate is made up by a one-piece moulding being made of injection-moulded plastics material and forming an upper plane having its lower surface integrally formed with the heating fluid circulation duct. Said plate is manufactured by means of an injection-moulding operation, a liquid injection being introduced into the mould at the same time as the plastics material and thus determining on one of the surfaces of the plate a duct through whose inside the liquid injection flows, with the particularity of determining in the longitudinal area of coincidence of the duct with the plate a reduction in the cross-section of said area in order to thus avoid the presence of material thicknesses that would bring about a delayed solidification of the plastics material in said area. The duct will determine at least one coil through which the heating fluid will circulate.

## Description

### OBJECT OF THE INVENTION

A heater plate for pigsty floors and the like, and a process for manufacturing it.

### FIELD OF THE INVENTION

These heater plates have a rectangular format and at their edges are provided with means allowing to fit them to each other, said plates resting on strips being used by way of joists, the main application for said plates being that of forming the floors in the pigsties where the sucking pigs are bred.

### BACKGROUND OF THE INVENTION

Different models of heater plates having the aforementioned application are known, the most widely used being those comprising in an embedded arrangement in the mass of plastics material forming the plate a metal coil through which the hot water will circulate.

Plates are also known wherein the hot water circulation duct is obtained by providing a first plate with a number of channels or grooves that are then longitudinally closed by fixedly attaching a second plate being juxtaposed on the first one.

These known plates are of complex manufacture and therefore rather cost intensive, and some of them suffer from the fault of having a poorly sealed heating circuit.

### SUMMARY OF THE INVENTION

It is the object of this invention to improve this type of heater plates, these latter for such a purpose being obtained with low-cost manufacturing means and being perfectly tight.

This plate is for such a purpose characterised in that it is made up by a one-piece moulding being made of injection-moulded, plastics material and forming an upper plane having its lower surface integrally formed with the heating fluid circulation duct being carried out in its entirety.

A characterising feature in this plate also lies in the fact of its having in the area of coincidence of the duct with the upper plane a reduced cross-section in order to thus avoid the presence of material thicknesses that would bring about a delayed solidification of this area of the duct after the injection-moulding operation and could possibly affect the manufacture of the plate and thus result in a plate having an imperfect finish.

The process for manufacturing these plates is characterised in that the plate of plastics material is obtained by means of an injection-moulding operation being carried out in the corresponding mould, a liquid injection being at the same time introduced into the mass of plastics material and thus determining on one of the surfaces of the plate a duct through whose inside the liquid injection flows, with the particularity of determining in the longitudinal area of coincidence of the duct with the plate a reduction in the cross-section of said area in order to thus avoid the presence of material thicknesses that would bring about a delayed solidification of the plastics material in said area and to thus eliminate the possibility of a breakage possibly taking place in said area of coincidence due to the pressing action being exerted by the shaping liquid injection mainly at the changes of direction or bends of the coil that will form the duct.

This process allows to obtain in one only operation a one-piece moulding that forms the plate and the duct through which the heating fluid will circulate.

In the actual moulding operation tubular stubs are at the same time obtained in the duct in order to thus be in a position to connect corresponding connectors for the heating fluid to flow in and out through them, some other stubs also being obtained in order to fixedly attach an insulating plate to them by means of screws, for example.

These and other characterising features will be best made apparent by the following detailed description whose understanding will be made easier by the accompanying two sheets of drawings showing some practical embodiments being cited only by way of example not limiting the scope of the present invention.

### DESCRIPTION OF THE DRAWINGS

In the drawings:
Fig. 1 illustrates in a perspective view the heater plate being the object of the invention;
Fig. 2 shows the aforementioned heater plate in a partially fragmented, perspective view as seen from the side of its lower surface;
each of Figs. 3 and 4 represents in a plan-view from below a respective heater plate having a different heating fluid circulation duct circuit; and
Figs. 5, 6, 7 and 8 correspond to different versions of the reduced cross-section of the area of coincidence of the duct with the upper plane of the plate.

### DETAILED DESCRIPTION

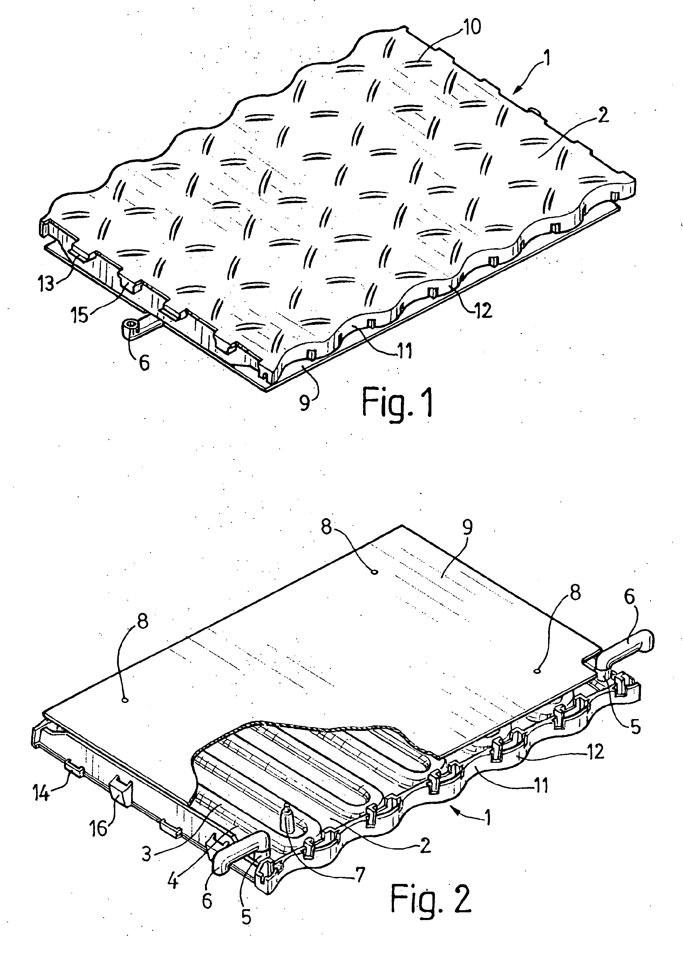

According to the drawings the heater plate (1) for pigsty floors is made up as a one-piece moulding being made of injection-moulded plastics material and forming an upper plane (2) being integrally formed on its lower surface with the duct (3) for the circulation of the heating fluid, said duct (3) in Figs. 1, 2 and 3 forming a coil whose lengths are parallel to the end edges of the plate (1).

In the area of coincidence of the duct (3) with the upper plane (2) the plate has a reduced cross-section (4) thus avoiding the presence of material thicknesses that would make it difficult to obtain a perfectly finished plate.

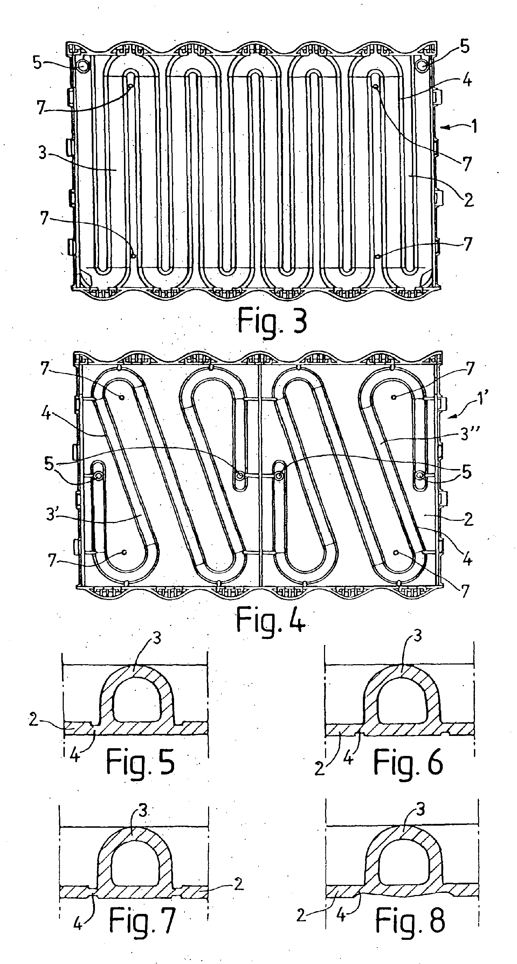

In Fig. 4 the plate (1') has the heating fluid circulation duct forming two coils (3') and (3") whose lengths are oblique with respect to the end edges of the upper plane (2).

In the actual moulding operation being carried out for moulding the plate (1 and 1') tubular stubs (5) have been obtained in the ducts (3), (3') and (3") in order to thus be in a position to connect corresponding connectors (6) for the heating fluid to flow in and out through them, some other stubs (7) also having been obtained in order to fixedly attach an insulating plate (9) to them by means of screws (8), said insulating plate being provided for preventing the occurrence of heat losses from the heater plate (1), this latter being in its upper plane (2) provided with ribs (10) being arranged in a mutually crossing arrangement and thus forming antislip elements against the slipping of the hooves on the plate.

This plate (1) and (1') has a generally rectangular make-up and at its longitudinal sides comprises arcuate recesses (11) and projections (12) being adapted to be fitted to the projections and recesses of the adjacent plates, said plate at its end sides having hooks (13) and pockets (14) being adapted to be fitted to each other when forming the pigsty floor, said fitting being also aided by projections (15) and sockets (16).

## Claims

1. A heater plate for pigsty floors and the like, **characterised in that** it is made up by a one-piece moulding (1) being made of injection-moulded plastics material and forming an upper plane (2) having its lower surface integrally formed with the heating fluid circulation duct (3).

2. A heater plate for pigsty floors and the like as per claim 1, **characterised in that** the area of coincidence of the duct (3) with the upper plane (2) has a reduced cross-section (4).

3. A heater plate for pigsty floors and the like as per the preceding claims, **characterised in that** the heating fluid circulation duct (3) forms at least one coil.

4. A process for manufacturing a heater plate for pigsty floors and the like as per the preceding claims, **characterised in that** the plate is obtained by means of an injection-moulding operation, a liquid injection being introduced into the mould at the same time as the plastics material and thus determining on one of the surfaces of the plate a duct through whose inside the liquid injection flows, with the particularity of determining in the longitudinal area of coincidence of the duct with the plate a reduction in the cross-section of said area in order to thus avoid the presence of material thicknesses that would bring about a delayed solidification of the plastics material in said area.

5. A process for manufacturing a heater plate for pigsty floors and the like as per claim 4, **characterised in that** the duct forms at least one coil through which the heating fluid will circulate.

6. A process for manufacturing a heater plate for pigsty floors and the like as per claim 4, **characterised in that** in the actual moulding operation being carried out for moulding the plate tubular stubs are obtained in the duct in order to thus be in a position to connect respective connectors to them for the heating fluid to flow in and out through them, other stubs being obtained on the lower surface in order to fixedly attach an insulating plate to them.
